# EUROPEAN PATENT SPECIFICATION

(11) **EP 3 426 964 B1**
(45) Date of publication and mention of the grant of the patent: **15.05.2024**
(21) Application number: 17709434.9
(22) Date of filing: 07.03.2017
(51) Int. Cl.: B08B 17/00, E21B 43/20, F16L 53/34, F16L 53/37, B08B 9/027, B08B 7/00, F28G 13/00

(54) **METHOD OF COOLING AN OIL WELL PRODUCT**
VERFAHREN ZUR KÜHLUNG EINES ERDÖLBOHRLOCHPRODUKTS
PROCÉDÉ DE REFROIDISSEMENT DE PRODUIT DE PUITS DE PÉTROLE

(30) Priority: 07.03.2016 GB 201603874
(43) Date of publication of application: 16.01.2019
(73) Proprietor: Empig AS, 7462 Trondheim (NO)
(72) Inventor: STRØMMEGJERDE, Lars Standal, 7056 Ranheim (NO); LUND, Fredrik, 7025 Trondheim (NO)
(74) Representative: Lincoln, Matthew
(86) International application number: PCT/EP2017/055359
(87) International publication number: WO 2017/153429

(56) References cited:
- WO-A1-89/11616
- WO-A1-2015/062878
- CN-A- 1 514 040
- US-A1- 2015 232 766
- US-B1- 6 278 095
- US-B2- 8 623 147
- LERVIK J K ET AL: "DIRECT ELECTRICAL HEATING OF SUBSEA PIPELINES", PROCEEDINGS OF THE INTERNATIONAL OFFSHORE AND POLAR ENGINEERINGCONFERENCE, XX, XX, vol. II, 6 June 1993 (1993-06-06), pages 176-184, XP000937746,
- ARNE NYSVEEN ET AL: "Direct Electrical Heating of Subsea Pipelines-Technology Development and Operating Experience", IEEE TRANSACTIONS ON INDUSTRY APPLICATIONS, IEEE SERVICE CENTER, PISCATAWAY, NJ, US, vol. 43, no. 1, 1 January 2007 (2007-01-01), pages 118-129, XP011161705, ISSN: 0093-9994
- Bai Yong ET AL: "Subsea Pipelines and Risers", , 5 December 2005 (2005-12-05), pages 377-378, XP055923831, books.google.de ISSN: 0080-4456 Retrieved from the Internet: URL:https://books.google.de/books?id=8bFnV BP0wusC [retrieved on 2022-05-23]

## Description

### Field

The present invention relates to a system for cooling a fluid. A particularly advantageous application of a system according to embodiments is the use of the system for the subsea cooling of an oil well product. The system comprises a new and advantageous periodical heating mechanism for heating the walls of the system's pipes in order to remove deposit build up from the oil well product on the inner walls of the system's pipes. An efficient and effective cooling system is provided that has a mechanism for preventing deposits blocking, or reducing flow, in the system's pipes.

### Background

In the subsea extraction of oil well products, pipes are used to transport the oil well products from the seafloor to the surface and also along the seafloor in subsea pipe networks that may comprise lengths of pipe up to about 100-150km. The pipes that are used to transport the oil well products, such as petroleum/oil, gas or other fluids, can become blocked or lose efficiency due to the formation of deposits on the inside of their walls. The deposits can be any of foreign materials, detritus, or natural waste products such as paraffin, calcium, wax, hydrates, scaling, naftenat and asphaltenes. The temperature of an oil well product on exit from a sea floor varies, but is normally in the range of 60°C to 80°C. It is therefore at a much higher temperature than the surrounding water at the sea floor. In the North Sea, the temperature of water at the sea floor is typically at about 4°C to 5°C but the temperature of the water may be higher or lower in other locations. The formation of deposits occurs when the temperature of the oil well product falls below a deposit forming temperature. The deposit forming temperature depends on the pressure and constituents of the oil well product but wax deposits will typically form when the temperature falls below about 40°C to 50°C and hydrate deposits typically form when the temperature of the oil well product falls below 25°C.

A number of different techniques exist for either removing such deposits or maintaining conditions that prevent such deposits from forming.

The techniques for removing a deposit from the inner wall of a pipe include the use of a pig, which is a scraper plug, that is pushed by fluid pressure (pushed from topside or well) along the inside of the pipe to scrape off the deposits. However, the inherent requirement of moving parts and complicated piping reduces the reliability of pig based systems. Another technique for removing and reducing deposits is the injection of chemicals into the fluid flow. However, this is expensive due to the cost of the additional piping and valves, the regeneration of chemicals and the chemicals themselves. The injection of chemicals can also cause environmental problems.

There are also techniques for preventing deposits from forming by maintaining the oil well product above the deposit forming temperature. One such technique is Direct Electric Heating (DEH). This is described in the paper 'Direct Electrical Heating of Subsea Pipelines - Technology Development and Operating Experience', Nysveen et al., IEEE Transactions on Industry Applications, (Volume:43, Issue: 1), pages 118 to 129, Jan.-Feb. 2007. DEH technology uses heating to keep the oil well products in a pipe warm so that the oil well products are maintained above the deposit forming temperature. The heating is provided by passing an electric current through the wall of a pipe. In order to help maintain the oil well product above the deposit forming temperature, it is essential for the pipe to be coated with thermal insulation. An advantage of DEH is that it is more efficient and cheaper than other forms of heating a pipe to maintain the temperature of an oil well product above the deposit forming temperature.

Another method for removing deposits is described in US8,623,147B2, referred to herein as US'147. This patent discloses a technique for removing deposits by first allowing the oil well products in a pipe to cool below the deposit forming temperature and then pulse heating the oil well product so that the deposits are removed as solid parts by the flow of the oil well product.

Heating techniques disclosed in US'147 include the use of external heating with an electrical heater and flushing with a hot fluid from a heat exchanger.

There is a need to improve known techniques for removing deposit formations on the inside of pipes and, more generally, the cooling of hot fluids when deposits may form.

The paper "Direct Electrical Heating of Subsea Pipelines", Lervik J K et al, Proceedings of the International Offshore and Polar Engineering Conference, vol II, 6 June 1993, pages 176-184, discloses background information.

### Summary

According to a first aspect of the invention, there is provided a method as set out in claim 1.

### List of figures

Figure 1 shows a cooling system according to an embodiment;
Figure 2A is a cross section of a pipe with a piggy back cable in a known DEH system;
Figure 2B is a cross section of a pipe with a piggy back cable according to an embodiment;
Figure 3 shows the effect of the separation between the longitudinal axes of a cable and a pipe;
Figure 4 shows a cooling system according to an embodiment;
Figure 5 shows a cooling system according to an embodiment;
Figure 6 shows a cooling system according to an embodiment;
Figure 7 shows a cooling system according to an embodiment;
Figure 8 shows a cooling system according to an embodiment;
Figure 9 shows a cooling system according to an embodiment;
Figure 10 shows a cooling system according to an embodiment;
Figure 11 shows a pipe configuration according to an embodiment,
Figure 12 shows a pipe configuration according to an embodiment,
Figure 13 shows a cooling system according to an embodiment,
Figure 14 shows a cooling system according to an embodiment,
Figures 15A and 15B show the junction between a warm flow of fluid and a cooled flow of fluid provided by a return loop and also how seed particles act as a catalyst/nucleate to form larger hydrate particles;
Figure 16 shows a cooling system according to an embodiment,
Figure 17 shows a cooling system according to an embodiment,
Figure 18 shows a cooling system according to an embodiment,
Figure 19 shows a pipe with a high pressure zone according to an embodiment;
Figure 20 shows pipe with two cooling elements according to an embodiment;
Figure 21 shows simulated results of the performance of a cooling system according to an embodiment;
Figure 22 shows simulated results of the performance of a cooling system according to an embodiment;
Figure 23 shows a large capacity compact cooling system according to an embodiment;
Figure 24 is a flowchart of a method according to an embodiment.
Figure 25 shows a heating cable coiled around a pipe according to an embodiment;
Figure 26 shows a plurality of heating cables coiled around a pipe according to an embodiment;
Figure 27 shows a heating cable coiled around a plurality of sections of a pipe according to an embodiment as well as a plurality of heating cables coiled around a plurality of sections of a pipe according to an embodiment;
Figure 28 shows pipe-in-pipe configurations according to embodiments;
Figure 29 shows cable configurations according to an embodiment;
Figure 30 shows cable configurations according to an embodiment; and
Figure 31 shows a system according to an embodiment.

### Description of embodiments

Embodiments provide a new technique for solving the problem of deposit formation in oil well products.

Embodiments provide a new and advantageous design of cooling system that receives a hot fluid, such as an oil well product, and cools the fluid substantially to the ambient temperature in such a way that deposits are washed along as solid particles in an output flow of cooled fluid rather than forming on the interior surface of the pipes of the cooling system. The cooling system is arranged so that the ambient environment, such as seawater, cools the fluid by conduction and/or convection from pipes carrying the fluid. The pipe walls of the cooling system are periodically heated so that the fluid is mostly cooled by the pipe walls but sometimes heated. The heating releases the solid deposits due to a similar physical effect to that disclosed in US'147. The heating technique of embodiments is through the use of electrical currents through the wall of the pipe. Advantages of the specific heating technique include it being more effective, efficient and less expensive than other heating techniques. In subsea applications, the cooling system is also easy to install on a sea floor.

A preferable embodiment of the cooling system is a compact unit that, in subsea oil extraction applications, would typically be located at, or near to, a subsea wellhead. If the output of the cooling system is substantially at the ambient temperature of the sea water then this allows the output oil well product to be transported as a cold flow. That is to say, the oil well product can be transported over long distances in a pipe network along the sea floor without the need for DEH, or other techniques, to heat the oil well product to prevent deposit formation. The provision of the cooling system as a compact unit allows the flexible re-configuration of the system given the fluid and environmental conditions.

Advantageously the cooling system improves on known pig based systems as substantially no moving parts are required. It also improves on chemical injection systems as there is no need for the cost of the injected chemical or the resulting environmental risks.

Advantages over US'147 are the improved effectiveness, efficiency and low cost of the specific technique used to heat the fluid. Further advantages provided by some embodiments are the provision of the cooling system as a compact unit with flexible operation and re-configuration with improved redundancy, instability, modularity, scalability, retrievability, interchangeability and serviceability

The cooling system according to embodiments is preferably provided as a modular design. This eases the installation and maintenance of the cooling system.

Embodiments cool a fluid flow to, or close to, the ambient temperature. Advantageously, the cooled fluid is more appropriate for long transportation distances as DEH systems are not required downstream. Embodiments therefore provide Cold-flow.

Embodiments are described in more detail below. Although embodiments are described mostly in the context of a subsea cooling system used for the subsea extraction of oil well products, embodiments include a surface based cooling system and also a cooling system for use in other industries.

In particular, other applications of embodiments include the cleaning of pipe separators, pipes in nuclear industries, sewage pipes, heat exchanger pipes, pipes in chemical plants, pipes for refrigerators, pipes for heat pumps, pipes for refineries, separation pipes, pipes for scrubbers, pipes in the food industry and flow assurance systems. Embodiments are generally applicable to applications comprising pipes within which a deposition comprising meltable components can form.

Embodiments are described in more detail below in the exemplary application of a subsea cooler arranged to cool a fluid oil well product at a wellhead.

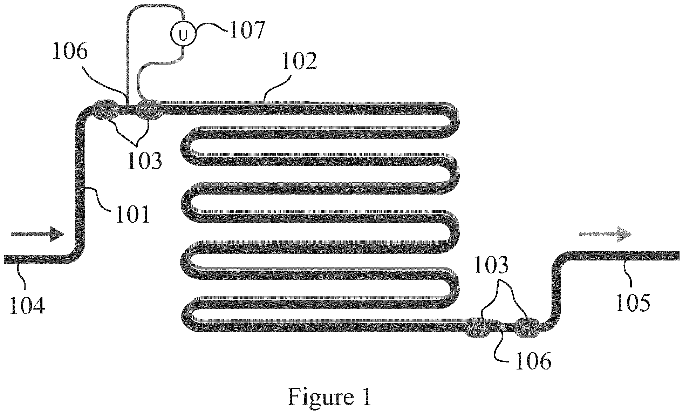

Figure 1 shows a pipe assembly for use as a cooling system according to an embodiment. As described in more detail below, the pipe assembly comprises a pipe 101, a piggy back cable 102, an inlet 104 an outlet 105, a plurality of electrical connectors 106 of the piggy back cable 102 to the pipe 101, anodes 103 and a power supply 107.

The pipe is a standard pipe as used in subsea applications, in particular known subsea coolers, and may be made of stainless steel or carbon steel. The pipe comprises a number of bends and has a wavelike shape but embodiments also include the pipe being substantially linear.

Attached to the pipe at each end are electrical connectors. The electrical connectors are in electrical connection with the wall of the pipe. The electrical connectors are also attached to an electrical power supply. The electrical power supply is arranged to heat the pipe wall by providing an electric current that flows through the pipe wall between electrical connectors. The electric power supply may be the same as that currently in use in DEH systems and would typically be provided by a cable connection either to a platform on the sea surface or to a nearby onshore facility.

The electric current that is supplied to the pipe wall may be either direct current (DC) or alternating current (AC).

Figure 1 shows an implementation with an AC power source. As shown on Figure 1, a cable, referred to as a piggyback cable, is preferably provided from one of the electrical connectors back along the length of the pipe to the power source. The longitudinal axes of the cable and the pipe are substantially parallel to each other. The effect of the piggyback cable with AC currents is that there is an inductive effect between the cable and the walls of the pipe. This, together with the flow of the current through the walls of the pipe, heats the pipe walls. The cable that is used may be a cable from a DEH system.

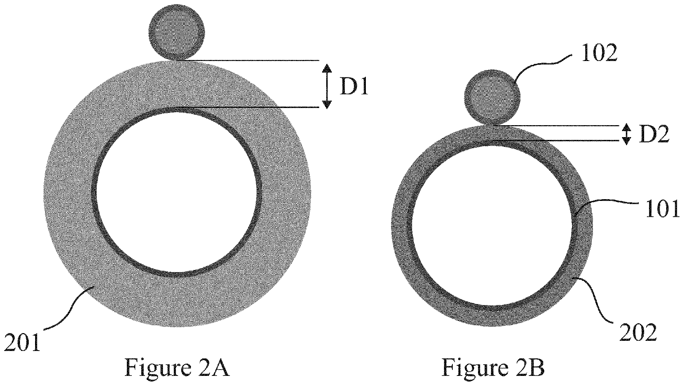

Figure 2A is a cross section of a pipe with a piggy back cable in a known DEH system with the minimum separation of the pipe wall and piggy back cable being D1. Figure 2B is a cross section of a pipe with a piggy back cable according to embodiments with the minimum separation of the pipe wall and piggy back cable being D2. A DEH system requires thermal insulation 201. Embodiments do not have thermal insulation around the pipe and instead only have coating 202 that is an electrical insulator. Accordingly, D2 is very much less than D1.

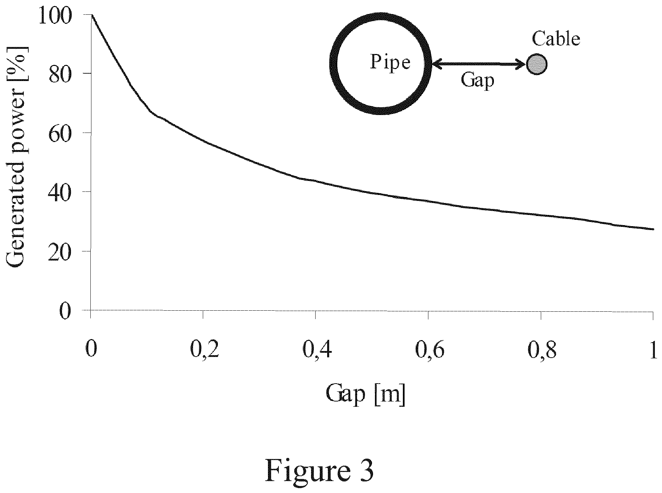

Figure 3 shows the effect of the separation between the longitudinal axes of the cable and the pipe (the graph is from a publication by SINTEF). The heating effect of the AC current increases as the separation of the longitudinal axes of the cable and the pipe decreases. Accordingly, the cable is preferably arranged to lie along the surface of the pipe, or to have only a small separation from the wall of the pipe, so as to provide efficient heating. This is a significant difference between embodiments and DEH based systems. In DEH based systems there is a motivation to provide a thick layer of insulation/ plastic coating around the pipes because it is essential for the pipes to have good thermal insulation. The piggyback cable is provided outside of the insulation due to the practical requirement of how DEH systems are manufactured and installed. Accordingly, in DEH system there is a greater separation between the cable and the wall of the pipe and this decreases the efficiency of the heating. As explained in more detail later, a further significant difference between embodiments and DEH systems is that the pipes according to embodiments are provided with an electrically insulating coating, that has a high thermal conductivity, and is a thin layer on the surface of the pipe. The frequency of the applied voltage to the pipe wall by the electric power source may be the same as that known for DEH systems. However, a lower voltage may be used due to the increased efficiency of the system and the difference between the periodic heating according to embodiments and the continuous heating applied in DEH systems.

If a DC current is used then no piggyback cable is required and each of the electrical connectors can be connected directly to the power supply. Relative to AC heating, the use of DC also reduces the peak voltage that needs to be applied to the pipe wall in order to heat with a particular electric power. An advantage of wavelike structures of the pipe, such as shown in Figure 1, is that the electrical connectors can be designed close to each other and only a small amount of cable to the electric power source is required. However, a disadvantage of a DC power supply is that the power supply is typically provided from an AC power source. For a DC electric current to be provided a rectifier is therefore required to convert the AC to DC. The rectifier may be located either at the surface or subsea as part of the cooling system. Although using DC avoids the use of a piggyback cable, the use of rectifier increases costs and introduces power losses.

Between each electrical connector are anodes. These are sacrificial anodes for helping to prevent the corrosion of the pipe and reducing the detrimental effects caused by passing an electric current through the pipe wall. The anodes may be the same as the anodes that are currently in use in DEH systems.

The anodes are preferably in a direct electrical connection to the metal pipe wall and the pipe coating is therefore not provided between the pipe wall and each anode or over the anodes. Alternatively, an anode bank may be provided close to the pipes of the cooling system and electrically connected to the pipe by a cable. An advantage of an anode bank is easier to design it to be retrievable and replaceable.

The pipe is coated with a material that preferably has all of the properties of providing corrosion resistance, having a high thermal conductivity and having a high electrical resistance. The coating preferably also provides mechanical protection and a smooth surface that is easy to clean and resists marine growth. Suitable coatings include ceramic materials. A particularly preferred coating according to embodiments is boron nitride. Boron nitride has the advantages of being inexpensive, providing a hard surface, being easy to apply already very widely used across a number of industries. It has a high thermal conductivity (typically 266 - 284 W/m-K), a high electrical resistivity (typically 1.00e+15 ohm-cm), and provides good corrosion protection. It is a ceramic material that can be used either alone or in combination with other materials or resins.

Embodiments include the use of other coating materials, such as aluminium nitride, aluminium oxide, chromium nitride, zirconium nitride, dichromium nitride, titanium aluminium nitride, chromium aluminium nitride, and titanium nitride, alkaline earth metal nitrides and alkali metal nitrides, ATS (aluminium thermal spray).

The most appropriate way of applying the coating material to the pipe will depend on the coating material used. Typical coating techniques, that are all known for the coating of pipes with such materials are painting, powder coating, electrolysis, extrusion, moulding, wrapping, lamination, weaving and thermal spraying.

The pipe is in a subsea environment and is configured so that substantially all of its outer surface is surrounded by seawater. The ambient temperature of the surrounding environment of the pipe may be about 4°C to 5°C. The fluid output from a well head may be at 60°C to 80°C of higher. By arranging the pipe to be surrounded by the seawater, and for the pipe to have a thermally conductive coating, the walls of the pipe are cooled by conduction to the seawater and convection of the seawater and the fluid in the pipe is therefore cooled to the ambient temperature.

The coating need only be thick enough to provide the desired electrical insulation, corrosion and strength properties and embodiments include the coating being no thicker than a standard coating of a pipe for most subsea applications. Advantageously, the coating is thin and this has the combined effect of both allowing fast cooling of the walls of the pipe due to the low thermal insulation and also, in embodiments in which a piggyback cable is used, high heating efficiency due to the thin coating allowing only a small separation between the cable and the pipe wall.

A cooling system according to embodiments may comprise just a single pipe with electric heating system as described above. The at least one pipe of the cooling system is arranged in the seawater so that it is cooled to the ambient temperature of the environment.

A fluid, that may be directly received from a wellhead or from another subsea system, flows into a pipe of the cooling system. Most of the time, no heating of the fluid is applied and the fluid is cooled to below the deposit forming temperature and deposits are allowed to build up on the inner walls of the pipe. The length of pipe is preferably such that fluid output from the cooling system has been cooled substantially to the ambient temperature. In order to remove the deposits from the inner surface of the pipe walls, the pipe walls are occasionally heated by the electric power source. The heating is preferably to a temperature that is sufficient to cause the deposits to be removed from the inner walls but not high enough to melt any of the waxes in the deposit. By not melting the waxes the reforming of the deposits on the inner walls of the pipe further downstream is unlikely to occur and the deposits will remain as solid particles in the fluid stream.

Advantageously, the cooling system according to embodiments improves on known cooling systems. No pig or injection of chemicals is required. In addition, the direct heating the pipe walls by an electric current is more efficient and effective than the heating techniques disclosed in US'147.

Raw production fluid basically consists of water, gas, condensate sand and oil. In some cases the water cut is quite high (e.g. during late production of a well and in certain areas) and has no value. In such cases it would be beneficial to remove the water before cooling the flow. This can be done using a separator in front of the cooler (gravitational, cyclone, pipe separator). The water has high heat capacity and will make the flow harder to cool. Reducing the amount of water will be beneficial in several ways; it will result in a shorter and more compact cooler, it will make long distance transportation easier because less pressure is needed to move/lift the lighter flow, and there will be less hydrate formation (Hydrates consist of water and gas). The removed water can be re-injected in a reservoir or used as pressure support in the well. This is not currently known in combination with a subsea cooler.

In other embodiments, gas can also be separated out of the flow. This can be beneficial for faster cooling of the liquid hydrocarbons, and also reduce the amount of hydrates that can form.

Some of the gas in the cooler will condensate when cooled and turn into liquid hydro carbons. This effect of the cooler is improved if there is subsea compression or boosting of the flow. The dryer gas that is separated out can be boosted without damaging the compressors and the stabile liquid is easier to pump without gas. The cooler will in this embodiment be placed in front of a gas-liquid separator.

Some separators are called pipe separators. They are gravitational separators made from large standard subsea pipes that can handle great pressure. The flow in these separators must be slow and non-turbulent for the flow components to separate effectively. Wax and hydrates may form in this situation because of pressure drop or cooling. The same cleaning system described for embodiments of the cooling system also applies for pipe separators and the pipe separators may be occasionally heated to remove deposits. Such a separator can be seen as a segment of embodiments of the the cooling system or even integrated within the cooling system.

The pipes of the cooling system according to embodiments may be made of ASTM A106 GR.B/carbon steel or similar materials. The inner diameter of the pipes may be in the range 5.08cm to 30.48cm (i.e. 2" to 12") or larger. The wall thickness of the pipe may be according to ASTM A106 gr.B. The total length of pipe may be in the range of approximately 300m to 6000m and is preferably in the range 300m to 1000m.

For systems using smaller pipes with a diameter of about 50.8mm to 101.6mm, i.e. 2" to 4", the internal flow will be more turbulent. A smaller pipe also has more cooling surface area compared to cross section area. Together this will make the cooling process more effective. A plurality of parallel smaller cooling systems with small pipes will therefore be more effective than a single cooling system with a larger diameter pipe and the same capacity as the plurality of smaller cooling systems.

Another effect of a turbulent flow is a process where dry hydrates that have formed will "bead blast" the inner walls and clean off much or all of the wax deposits. This effect will reduce and sometimes remove the need for external heating for wax deposit cleaning. Not all fields will have the ideal composition between hydrates and wax, but this effect is beneficial in many cases.

Smaller cooler modules will also be easier to install since a smaller crane vessel is needed. The modularity also makes the total installation more scalable and flexible to fit the changes in production flow during a field's lifetime and possible new tie-ins.

The embodiment as shown in Figure 1 has a power supply that is arranged to heat the entire length of the pipe assembly when it is operating and to not heat any of the pipe assembly when it is not operated.

Embodiments include the use of a switching system that advantageously allows sections of the pipe assembly to be heated independently of the other sections of the pipe assembly. The control over which sections of the pipe assembly are heated allows more efficient operation of the system. The power source can be operated continuously and at a lower power than if the entire length of pipe is heated. In addition, each of the consecutively heated sections can be heated faster than if the entire length of pipe is being heated.

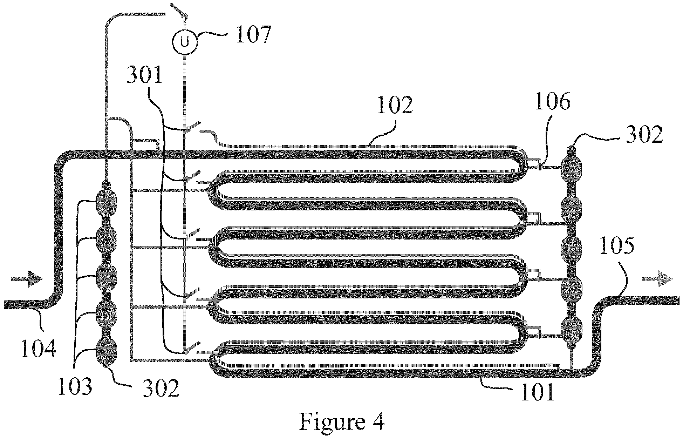

Figure 4 shows a pipe assembly with a piggyback cable, so that it is configured for heating by an AC power supply, with switches 301 that control which sections of the wavelike pipe shape are heated according to an embodiment. The anodes are provided in an anode bank 302.

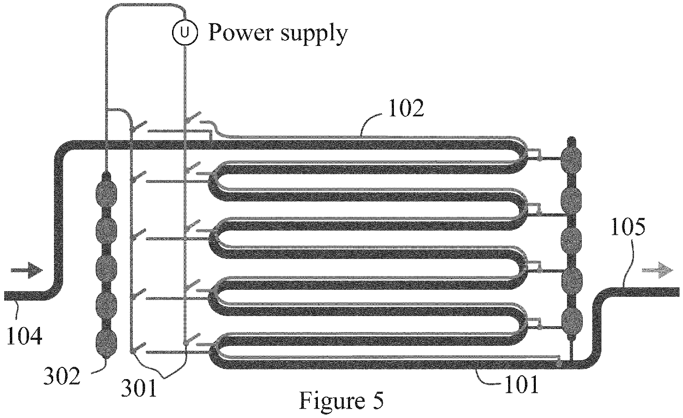

Figure 5 shows a pipe assembly with a piggyback cable with switches that control which sections of the wavelike pipe shape are heated according to another embodiment.

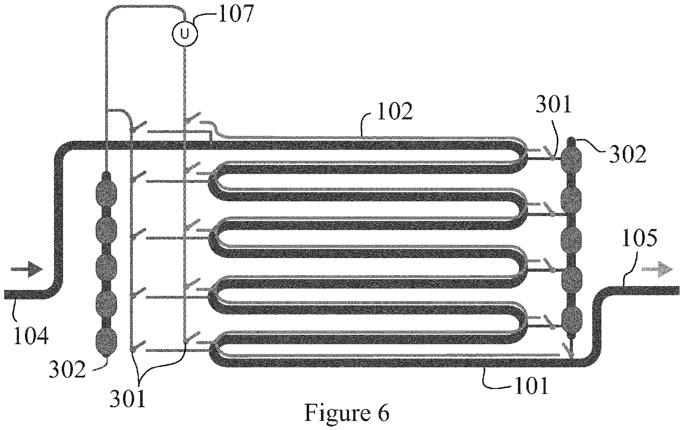

Figure 6 shows a pipe assembly with a piggyback cable with switches that control which sections of the wavelike pipe shape are heated according to another embodiment.

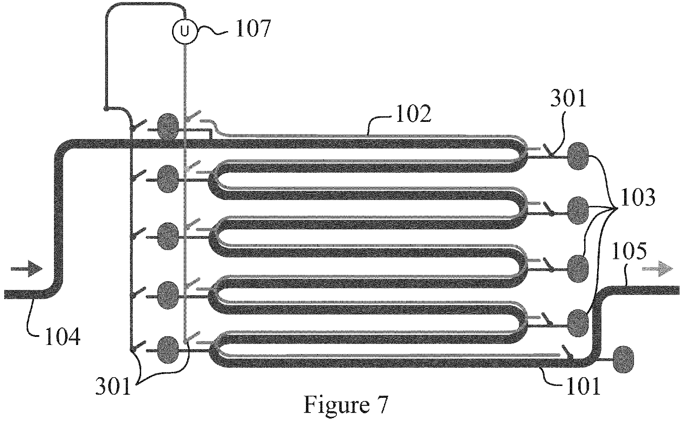

Figure 7 shows a pipe assembly with a piggyback cable with switches that control which sections of the wavelike pipe shape are heated according to another embodiment. The anodes are provided separately rather than being connected together in an anode bank.

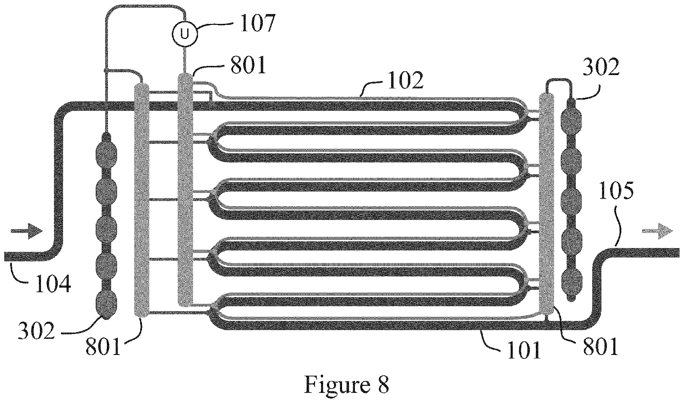

Figure 8 shows a pipe assembly according to another embodiment. The pipe assembly corresponds to that in Figure 7 but the switches are provided in switch boxes 801.

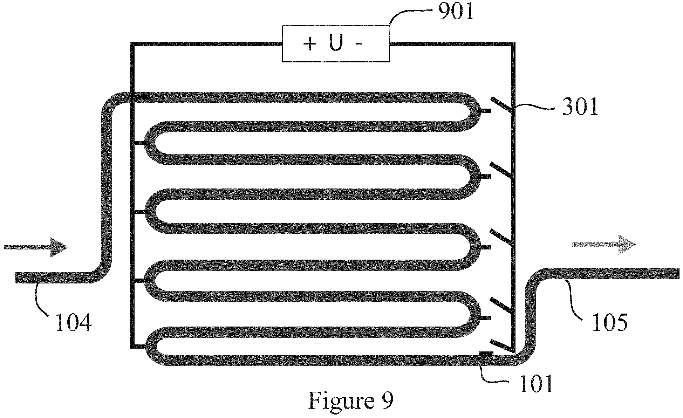

Figure 9 shows a pipe assembly according to another embodiment. The pipe assembly is only configured for heating by a DC power supply 901 and switches are provided to control which section(s) of the pipe assembly are heated at any particular time.

In Figures 4 to 9, either anodes or anode banks are provided close to the pipe system Embodiments also include all of the pipe systems disclosed herein alternatively having anodes directly connected to the pipe walls. The embodiment shown in Figure 9 also has anodes, that are either directly connected to the pipe or provided by a separate anodes or an anode bank, though these are not shown in Figure 9.

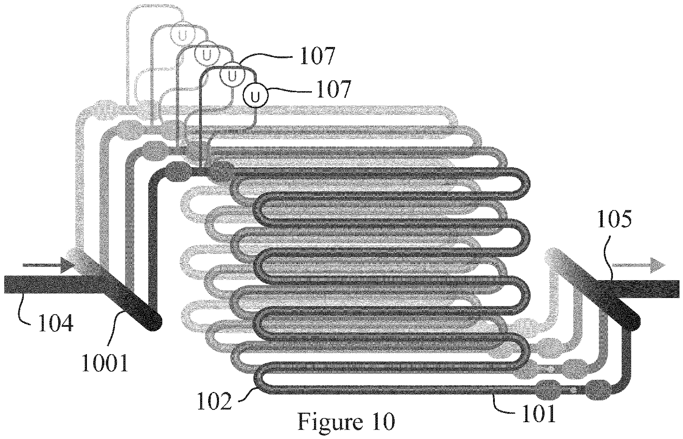

Figure 10 shows an embodiment of the cooling system that comprises a plurality of pipe assemblies. The cooling system has a single input port through which a fluid flows. A splitter, or manifold, 1001 then splits the fluid into a plurality of fluid flows that each flow into a different pipe assembly. The pipe assemblies, which each may be any of the above-described pipe assemblies that are shown in Figures 1 and 4 to 9, are arranged in parallel planes with each other, i.e. they in a stacked configuration. The fluid output from each pipe assembly flows into a combiner that combines all of the fluid flows. The single fluid flow output from the combiner is the output fluid flow from the cooling system.

The system preferably comprises valves arranged to control which of the pipe assemblies an input fluid flow can flow into. Advantageously, the cooling system can be reconfigured and is adaptable to different fluid flows.

Although Figure 10 shows the system with each pipe assembly having its own power supply, embodiments preferably have the same power supply providing power to each pipe assembly. A switching system allows the heating of each pipe assembly to be controlled independently of the other pipe assemblies.

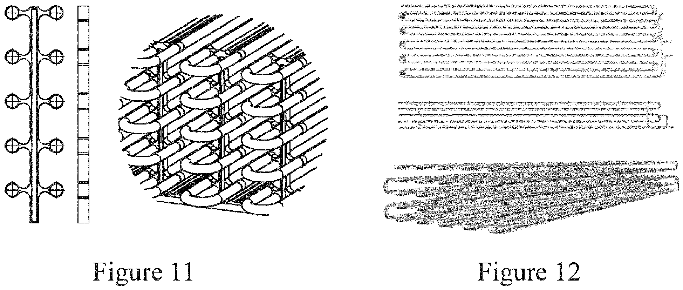

Figure 11 shows how the stacked configuration of pipes is preferably provided. The spacing between the pipes allows convection currents to form and these increase the rate at which the pipes are cooled.

Figure 12 shows another cooling system according to embodiments. As in Figure 10, the cooling system comprises a plurality of wavelike pipe assemblies arranged in parallel planes. The embodiment shown in Figure 12 differs from that in Figure 10 in that there is no splitter or combiner. The input fluid flow to the cooling system is only input into one of the pipe assemblies. A pipe connects the output of that pipe assembly with the input of another pipe assembly, the output of which is similarly connected by a pipe to the input of another pipe assembly and so on until the fluid flow is output from the cooling system without ever being split or combined. This embodiment is a cheaper and easier implementation of a cooling system one with a splitter, combiner and valves.

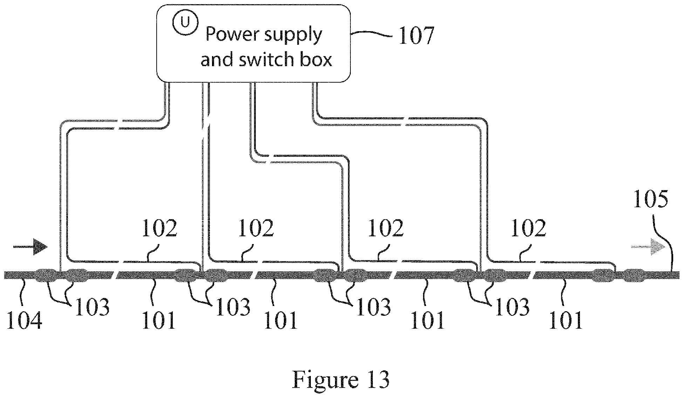

Figure 13 shows another cooling system according to embodiments. In Figure 13 the pipe assemblies are all linear and they are arranged co-linearly with each other. A switching system is provided that allows the heating of the pipe assemblies to be individually controlled. The cooling system may either be formed by combining a plurality of linear pipe assemblies or by providing the anodes and electrical connections on a single length of pipe in a way that creates a plurality of sections along the length of pipe wall through which an electric current can flow. Each of the sections is preferably about 100m long.

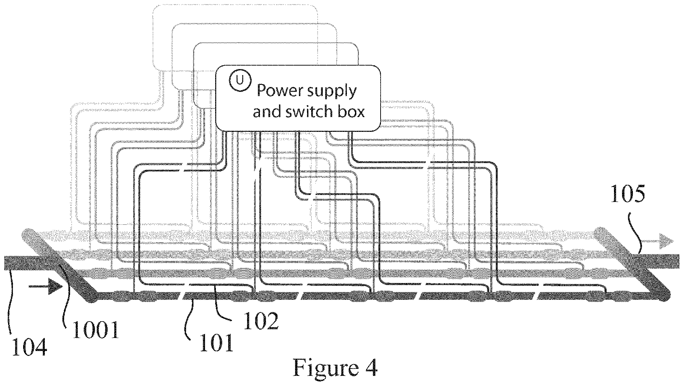

Figure 14 shows another cooling system according to an embodiment. The cooling system comprises a plurality of the cooling systems with a plurality of co-linear pipe assemblies as shown in Figure 13. The plurality of co-linear pipe assemblies are arranged alongside each other and in the same plane. The cooling system has a splitter for splitting the input fluid flow into flows into each of the co-linear pipe assemblies and a combiner for generating a single output flow from the cooling system from the output fluid flows from the plurality of co-linear pipe assemblies. Preferably a valve system is provided for controlling which of the pipe assemblies the input fluid can flow through. Preferably a single power supply provides all of the heating and the heating of each section of each pipe assembly can be individually controlled.

Embodiments include other configurations of cooling system. For example, embodiments include a cooling system that comprises a plurality of the cooling systems as shown in Figure 14 in a stacked configuration. Embodiments also include a cooling system that comprises both linear and wavelike pipe assemblies.

The stacking of the pipe assemblies, and the use of wavelike pipe assemblies, allows for a compact cooling system to be provided. The cooling applied to the input fluids increases with the length of pipe that the fluid passes through. By providing a compact cooling system and large amount of cooling can be provided by the cooling system.

Embodiments also include modifications to the above-described pipe assemblies so as to include a return loop, or retour loop, in the pipe assembly. Return loops are disclosed in, for example, https://www.sintef.no/en/proiects/saturn-cold-flow/, as viewed on 26 January 2016.

The return loop might also be fitted with a heat cleaning system so that the return loop is occasionally heated to remove any deposits that have formed therein.

Seed crystals of hydrate particles are used to kick-start crystallisation/formation of wax and hydrates and thereby reduce the length of the system.. This is done by shock cooling of the fluid input to the cooling system by mixing it with fluid from the output of the cooling system that comprises seed particles. A pipe and valve system is further provided as a return loop of fluid output from the cooling system to fluid input to the cooling system.

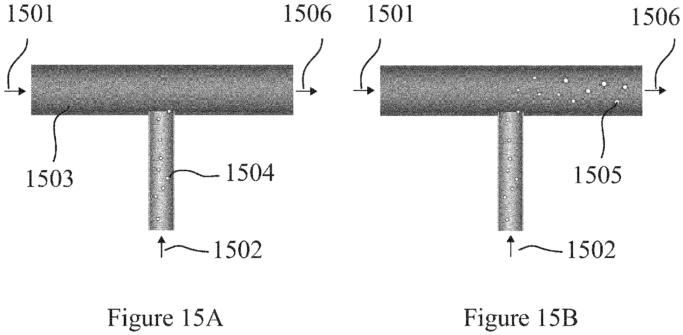

Figures 15A and 15B show the junction between an input warm flow 1501 of fluid 1503 at an inlet of the pipe assembly and a cooled flow 1502 of fluid provided by the return loop from the outlet of the pipe assembly.

In Figure 15A, the fluid comprises material that can form deposits, which in a flow of oil may include water particles and gas 1504. The cooled flow comprises a dry hydrate particles and is a slurry. As shown in Figure 15B, the mixing of the dry hydrate particles with the particles in the warm flow accelerates the formation of the particles in the warm flow into dry hydrate particles 1505 within the flow to outlet 1506.

Advantageously, the rate of formation of particles within the flow is increased and the efficiency and effectiveness of pipe system at preventing deposits from forming is increased.

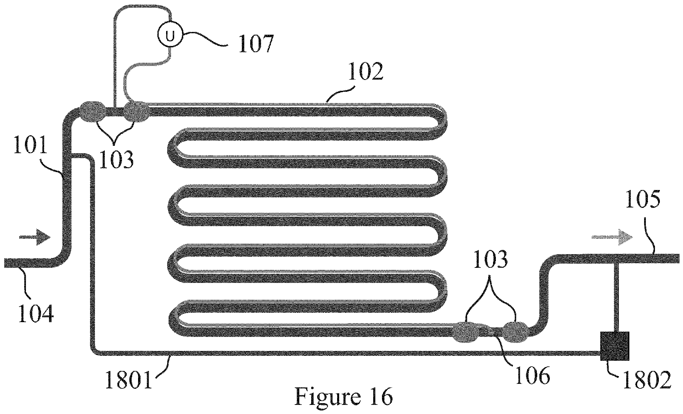

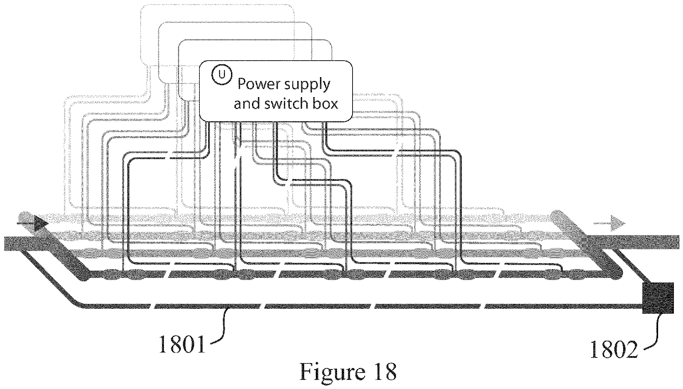

All of the embodiments of pipe assemblies may be adapted to comprise a return loop. For example, Figures 16, 17 and 18 respectively show the pipe assemblies of Figures 1, 10 and 14 adapted to comprise a return loop 1801.

Pump 1802 is provided to pump part of the fluid from the output of the pipe assembly back to the input.

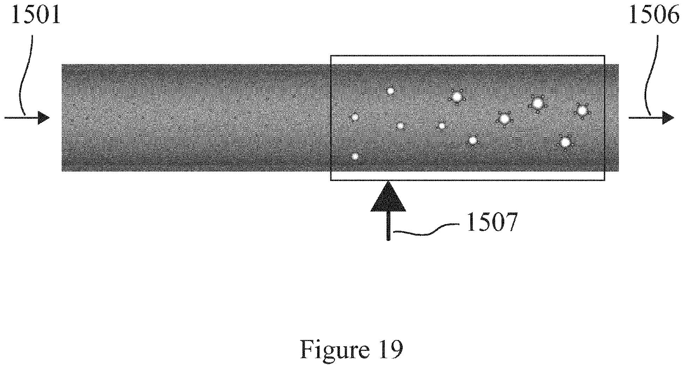

Figure 19 shows an alternative embodiment for accelerating the formation of dry hydrates within the flow that may be applied in addition to, or instead of, a return loop. The pipe comprises a zone 1507 within which the pressure is increased. The pressure increase may be provided by, for example, a pump or narrowing of the pipe. The effect of increasing the pressure is to accelerate to formation of dry hydrate particles.

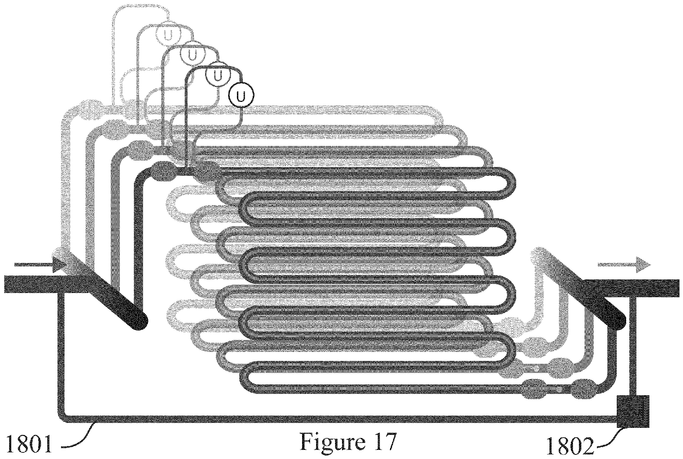

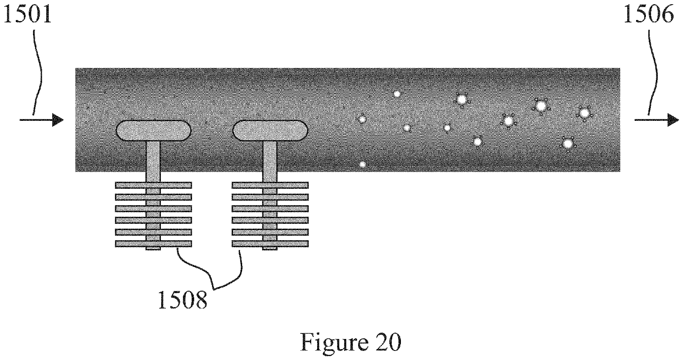

Figure 20 shows an alternative embodiment for accelerating the formation of dry hydrates within the flow that may be applied in addition to, or instead of, a return loop. Provided within the flow are one or more cooling elements 1508. The cooling elements may be passive and have, as shown in Figure 17, a cooling finger in the flow path and a heat sink that is cooled by the external environment of the pipe. Alternatively, the cooling elements may be active. An active cooling element would provide faster cooling than a passive cooling element and can also cool to a temperature below the surrounding environment of the pipe. The effect of the cooling is to accelerate formation of dry hydrate particles.

Embodiments also include any of the above described cooling systems being installed on supports, or stilts, so that the cooling systems are raised from the seabed. This prevents the seabed acting as a thermal insulator on the lower surface of the pipe assembly and increases rate of cooling by increasing the flow of sea water through the cooling system.

Simulations have been performed to demonstrate the performance of the cooling system described herein. The pipes were made of ASTM A106 GR.B/carbon steel. The wall thickness of the pipe is according to ASTM A106 gr.B. The simulation packages used to obtain a power consumption analysis and other results were UNIGRAPHICS NX NASTRAN and Excel.

The cooling system was simulated with an input fluid temperature of 80°C, an ambient water temperature of 4°C and a fluid flow rate of 1 m/s.

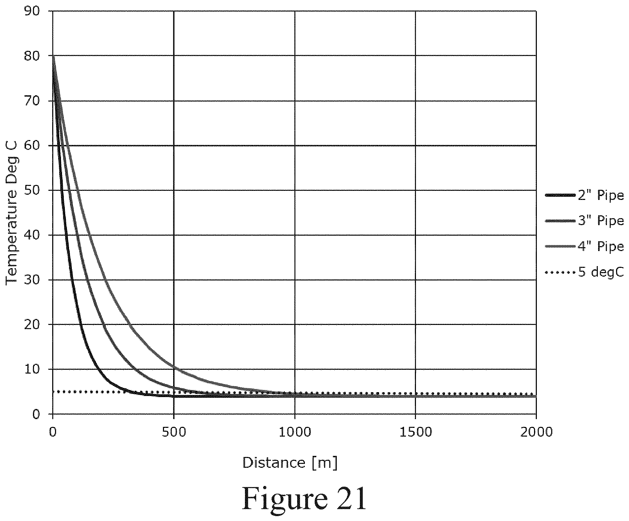

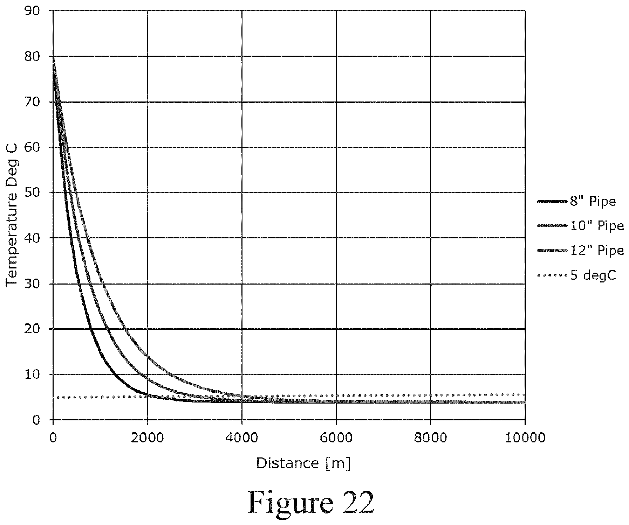

Figure 21 shows the results of simulations of the pipe assembly according to embodiments with pipe inner diameters of 5.08cm, 7.62cm and 10.16cm (i.e. 2", 3" and 4"). Figure 22 shows the results of simulation of the pipe assembly according to embodiments with pipe inner diameters of 20.32cm, 25.40cm and 30.48cm (i.e. 8", 10" and 12").

The required length of the pipe(s) in the cooling system was modelled given the requirement that an input fluid at 80°C is cooled to 5°C with enough periodic/interval heating being applied through the cooling process to cause deposits that have formed on the inner surface of the pipe to be released as solid particles with a low likelihood of re-forming on the inner surface of the pipe. The simulations were performed for a straight length of pipe. A stacked cooling system design would have a greater cooling effect than that for a linear pipe and therefore lower lengths of pipe are expected to achieve the cooling.

The fastest cooling is achieved with the lowest diameter of pipe and a 5.08cm of pipe was simulated to have a required total length of 350m. Pipes with a larger diameter require a longer length of pipe to substantially reach the ambient temperature but they have a larger capacity.

A typical heating arrangement would comprise parts of the cooling system being periodically heated for a short length of time every 24 hours. The heating is preferably performed only once every 24 hours but embodiments also include the heating being performed more than once every 24 hour period. Preferably, the parts are sequentially heated. An advantage of sequentially heating different parts of the system is that the power source can be operated continuously with a substantially constant power demand on the power source.

The rate at which deposits build-up is dependent on the specific circumstances and properties of an oil well product and will typically be in the range of 3-6mm/week. The on/off times of the heating are preferably adjustable. Accordingly, the on/off times of the heating can be made dependent on a measured, or estimated, deposit build-up rate. This results in an energy saving as heating in substantial excess of what is required is avoided.

Finite Element Analysis was performed to determine to simulate the required power to heat a pipe from an ambient temperature of 5⁰C to a target temperature of 50⁰C.

The simulation was performed with the following conditions:
- Pipe material was ASTM A106 GR.B/carbon steel;
- Inlet fluid flow temperature: 5⁰C
- Ambient water temperature: 5⁰C
- Target temperature was 50⁰C on the inner wall of the pipe in order to remove deposits
- Flow rate: 1 m/s
- Inner wall deposits: 1 mm wax layer

For a 7.62mm, or 3", pipe diameter, that is 100m long, a power of 1.49MW for 112s is required for a 50⁰C temperature of the inner wall of the pipe

For a 25.4mm, or 10", pipe diameter, that is 100m long, a power of 3.5MW for 492s is required for a 50°C temperature of the inner wall of the pipe

For a 304.8mm, or 12", pipe diameter, that is 100m long, a power of 3.57MW for 660s is required for a 50⁰C temperature of the inner wall of the pipe

Increasing the applied power will allow shorter heating times.

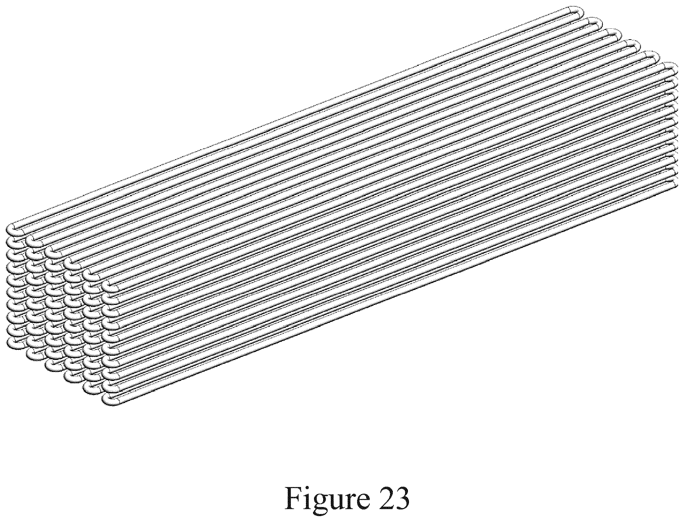

Figure 23 shows an embodiment of a large capacity compact cooling system according to an embodiment. There is a single pipe through the system and no splitter or combiner are used. The pipe has an inner diameter of 30.48cm. the total length of the pipe is approximately 5000m. The dimensions of the cooling system are 10m wide, 7m high and 40m long. The mass of the cooling system would be about 1700 tonnes. The pipe can be heated with either a DC power supply or, with a piggy cable provided, an AC power supply as described above. Embodiments also include large capacity compact cooling systems with alternative dimensions to those of the system shown in Figure 23.

A particular preferred embodiment is for an input flow to the cooling system to be split into a plurality of smaller flows with each of the smaller flows cooled by a pipe with a relatively small diameter, such as 5.08mm or 7.62mm. The effectiveness of the cooling increases as the pipe diameter decreases and such the present embodiment is more effective than a cooling system with the same capacity but implemented by a single larger diameter pipe. In addition, in small diameter pipes, turbulent flow increases the cooling efficiency and solidified hydrate/wax effectively 'sand blasts' the inner wall of the pipe and increases the cleaning efficiency.

In the event of plugs occurring in a pipe, the heating mechanism of embodiments can be operated so that the plugs are removed. Plugs may occur following a system shutdown, stops in production, etc. When the production is resumed, embodiments allow cleaning of an entire cooling system to ensure an efficient start-up.

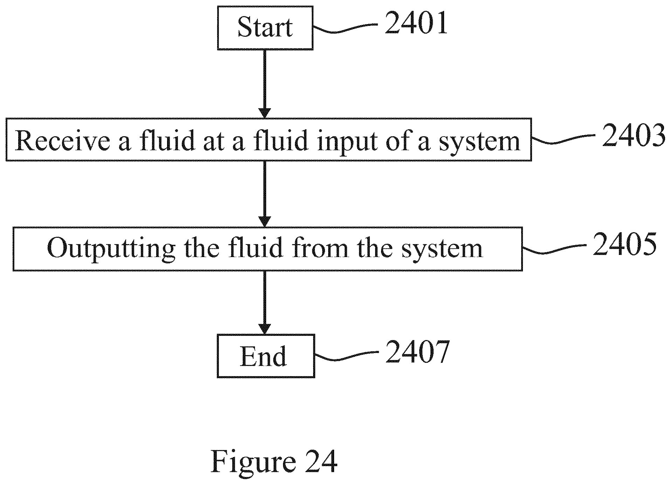

Figure 24 is a flowchart of a process according to embodiments.

In step 2401, the process begins.

In step 2403, a fluid is received at a fluid input of a system according to embodiments.

In step 2405, the fluid is output from the system.

In step 2407, the process ends.

A further embodiment of the invention is described below.

In the present embodiment, the heating of pipe wall is performed by a heat emitting cable that is provided along the outer surface of the pipe. The heat emitting cable is preferably coiled around the outer circumference of the pipe but may alternatively not be coiled and in a similar configuration to the cable of the previous embodiments. In the present embodiment, the same technique of removing debris from the inner wall of the pipe by heating the pipe wall as described in previous embodiments is applied. However, the present embodiment differs from previous embodiments in the way that the pipe is heated. In the present embodiment, the pipe still has a thermally conductive, and possibly also electrically insulating, coating for the efficient cooling/heating of pipe segments as well as the other properties of the pipes and cooling system as described in previous embodiments. The dimensions of the pipe and lengths of heated pipe sections may be as described in previous embodiments. The length of the pipe segments may be up to 6000m as in previous embodiments but the length of the pipe segments is preferably up to 300m. The present embodiment can be implemented in the same configurations as described in previous embodiments. For example, the pipes of the cooling system may be elevated, stacked pipes.

In the present embodiment the heating is not by inductive heating but instead by a heat emitting cable, i.e. heating cable, which is coiled around the outside of a pipe in order to directly heat the pipe wall. Segments of a pipe, or an entire pipe, are occasionally heated in order to remove any wax (and other debris) that has built up on the inside of the pipe. Segments of the pipe have a coating that is thermally conductive. The coating may also be electrically insulating. When the pipe segments are heated by the heating cable, any wax and hydrate debris formed on the inside of the pipe is removed and transported by the production fluid flow.

The heating cable is coiled around the pipe. The spacing of the coils is such that there is efficient cooling of the pipe flow when the heating cable is turned off and not heating the pipe wall.

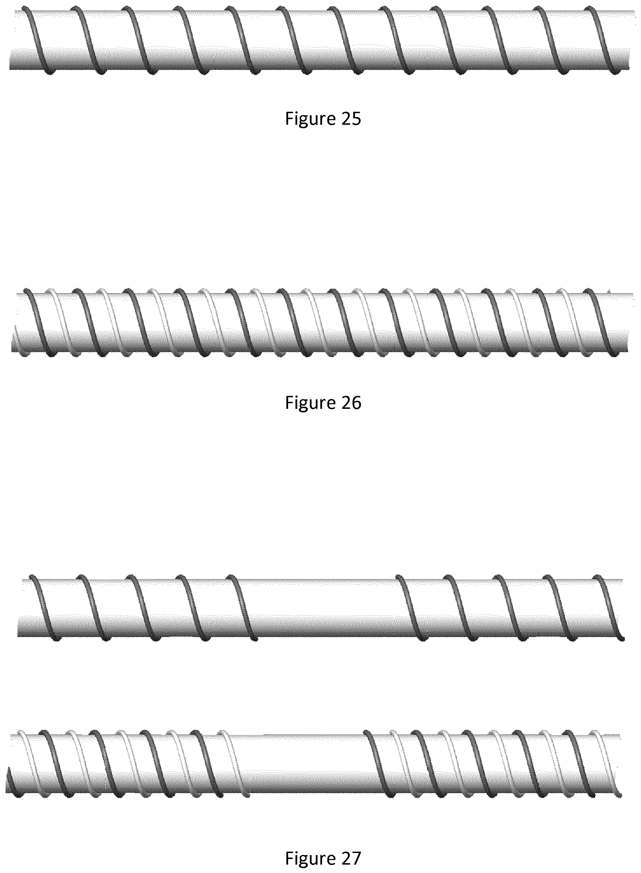

Figure 25 shows a heating cable coiled around the outer circumference of a pipe segment according to the present embodiment. The separation of the coils ensures that the pipe can be efficiently cooled.

In an alternative implementation of the present embodiment, a plurality of two or more heating cables are used to heat the pipe as shown in Figure 26. The heating cables are preferably in a coiled configuration around the outer circumference of the pipe but may alternatively not be coiled. The heating of each of the plurality of heating cables is independently controlled so that the amount of heating that is applied can be varied by controlling how many of the heating cables are heated. Advantageously, the system can provide the different heating requirements that may be required throughout the lifetime of the reservoir and changes in temperatures of the production fluid and environment. Having a plurality of heating cables also provides the cooling system with redundancy and a longer design life as the heating requirements of each individual cable are reduced and heating can still be provided if one of the heating cables fails. Each of the plurality of cables may have the same heating power or the heating powers that each cable can provide may be variable. Embodiments also include the heating cables overlapping each other and/or being wound around each other.

The fluid output from the cooling system is preferably cooled to about the ambient temperature. In order to remove the wax in pipe segments of the cooling system, one or more of the heating cables is switched on through a control system. During the heating period, the fluid flowing in the heated section will not be cooled. To ensure that the fluid output from the cooling system is still at about the ambient temperature when heating is applied, the number of pipe sections that are not heated preferably exceeds the number of pipe sections that are heated as appropriate for ensuring that the fluid output from the cooling system is at about the ambient temperature.

Implementations of the present embodiment also include the length of the segments of pipe that are heated being less that pipe segments in the cooling system. As shown in Figure 27, there may be a plurality of coiled sections of heating cables along a linear section of pipe. The coiled sections, that may be provided by different heating cables, may be activated sequentially in order to remove wax and hydrate deposits on the inner pipe wall. Advantageously, the deposit removal is from a plurality of small sections of pipe instead of one large section and it is easier for the fluid flow through the pipe to carry the deposit.

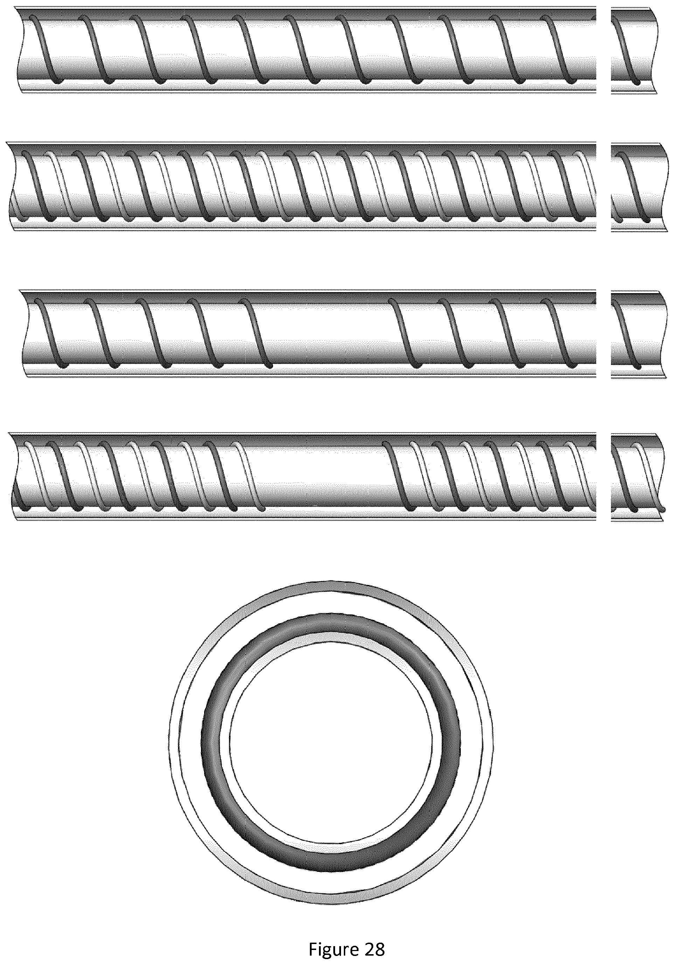

Figure 28 shows another implementation of the present embodiment. As shown in Figure 28, the pipe according to previous embodiments is an inner pipe and an outer pipe is provided around the inner pipe. The inner pipe is still provided with one or more heating cables as previously described. The heating cables are therefore provided in a cavity between the inner and outer pipe. The pipe-in-pipe configuration allows active cooling sections to be provided together with heating cables. Such sections can alternate between providing cooling of the flow, in order to provoke wax and hydrate formation on the inside of the pipe wall, and heating of the pipe to remove the debris. The active cooling is performed by pumping cold sea water in the cavity between the pipes, preferably as a counter-current (i.e. in the opposite direction of the production flow) so as to provide highly efficient cooling. The active cooling allows a more efficient, and smaller, cooling system to be provided. A further advantage of a pipe-in-pipe configuration is that the outer pipe serves as a protective structure for the heating cables, protecting them from external stresses or impacts. In the same way as described above, there may be a plurality of coiled sections of heating cables within the pipe-in-pipe configuration, and there may be sequential heating of the coiled heating segments.

Embodiments include a number of modifications and variations to the embodiments as described above.

The electrical power supply would typically be from a single power source on a platform on the sea surface or an onshore facility. However, embodiments include more than one power supply being used and/or the use of a subsea electrical power source.

Embodiments also include the provision and use of thermometers on the surface of the pipes and measuring the ambient temperature of the seawater, and other sensors, for providing feedback to a control system for controlling the heating of the pipes. In embodiments in which the cooling system is re-configurable, the control system preferably also controls the configuration of the cooling system and also preferable is configure to automatically control the operation of the cooling system.

Embodiments include the use of an inner pipe diameter that is less than 5.08cm or greater than 30.48cm and all dimensions between these limits.

Embodiments include the use of a pipe length that is less than 300m or greater than 6000m and all dimensions between these limits.

Although embodiments are described in the context of a subsea cooling system, embodiments include the use of the cooling system in other industries.

Embodiments have been described as periodically heating a fluid flow with the heating being performed at regular periods. Embodiments also include the heating being performed as and when required, without being restricted to being performed at regular periods. The heating is on/off, or pulse heating, with no heating for any particular part of the system being applied most of the time. The parts of the system may be heated sequentially.

The cooling systems according to embodiments may cool an input fluid to the ambient temperature of the cooling system but embodiments are not restricted to cooling to this temperature and the output fluid from the cooling system may be above ambient temperature. This reduces the cooling requirements of the cooling system and may result in little, or no, loss of performance so long as the output fluid is low enough temperature for deposit formation to be unlikely to occur. In addition, if the cooling system is provided upstream of one or more other subsea systems, such as a subsea compressor, it may be preferable for the fluid flow to be above ambient temperature.

The cooling systems of embodiments may be provided in a frame. This is particularly advantageous for subsea applications in which the cooling system needs to be lowered into place as the frame provides protection, structural stiffness and lifting points.

Preferably, the cooling systems of embodiments further comprise a cleaning system for cleaning the outside of the pipes of the cooling system. The cleaning system may clean the pipes by flushing, scraping, brushing or other techniques.

All of the implementations of the embodiment in which one or more heating cables are provided instead of inductive heating may also be applied to all of the implementations of all of the embodiments in which inductive heating is applied. For example a pipe-in-pipe configuration may be provided with active cooling and heating that is provided by inductive heating.

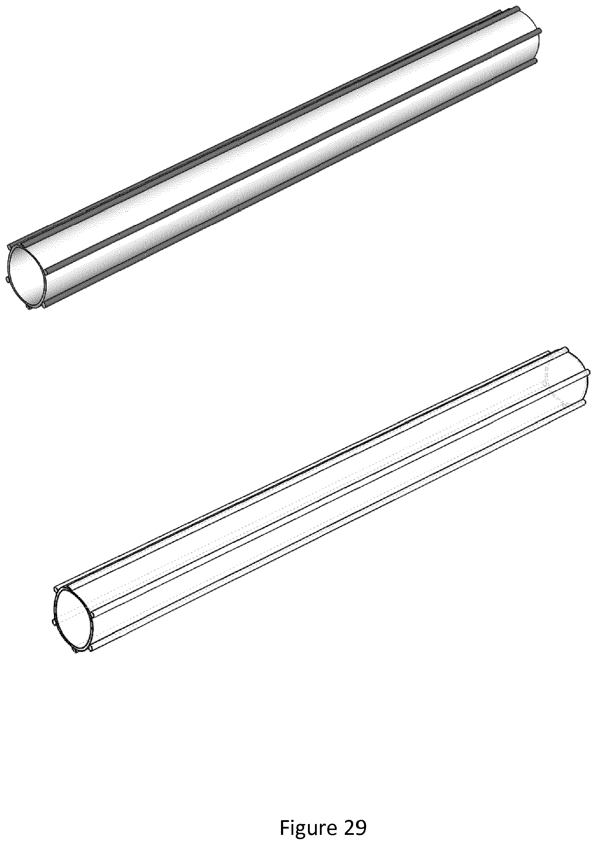

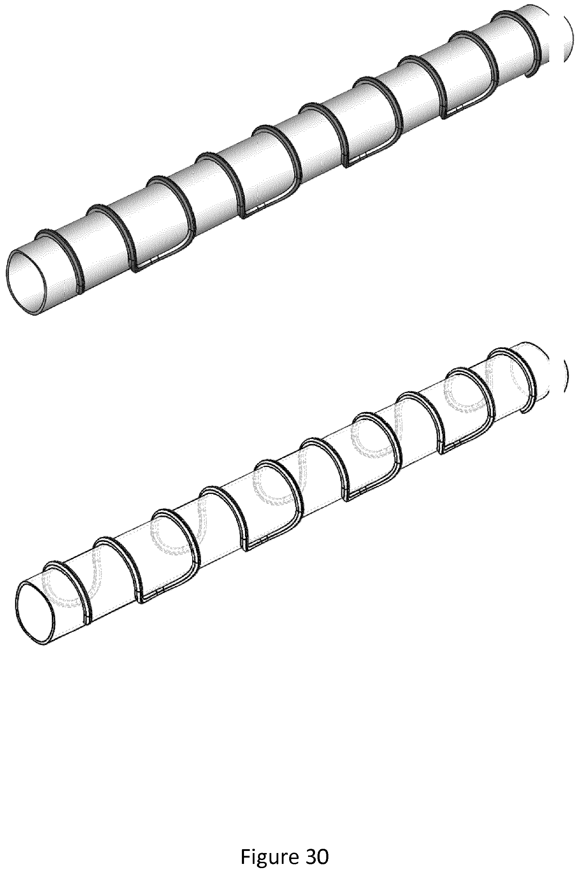

Embodiments include a plurality of independently controllable heating cables being provided with only one of the heating cables being used in a standard heating operation. The other heating cables are redundant and can be used if there is a failure of the main heating cable or if additional heating is required. As shown in Figures 29 and 30, the heating cables may be provided along the pipe parallel to each other in a linear, coiled or wave like configuration. The heating cables may each have the same or different dimensions. The heating cables may each have the same or different capacity rating. The heating may be generated by joule effect or simple heat transfer. Embodiments include the cable configurations as shown in Figures 29 and 30 being used in both a single pipe system and a pipe-in-pipe system.

Preferably, sequentially heating zones are provided along the pipe so that relatively short sections are heated one at a time. However, embodiments also include more than one, or all of the sections, being heated at the same time.

Each of the heating cables can be flat. There may also be a plurality of heating cables arranged around the circumference of a cross-section of the pipe with an equal spacing between the heating cables. Standard operation may include more than one of the heating cables being heated at the same time.

All of the heating cables referenced herein can be any known resistive heating cable, by either an AC or a DC current, or piggyback cables that apply inductive heating based on the direct electrical heating (DEH) effect.

Embodiments include a coarse subsea separator being provided upstream of the cooler(s) in order to get rid of much of the heat energy stored in the produced water. The water can then be re-injected or pumped up to the surface for treatment. By reducing the amount of warm water in the flow, the size of the cooler can be reduced and less hydrates will form. Embodiments also include providing a gas separation system for increasing the cooling effect and reducing the amount of hydrates and slugging.

Embodiments include the use of a retour pump and conduit system for pumping a cold stream from the output of the cooler to the hot end of the cooler. The retour pump and conduit system can also be used for circulating, reversing or flushing the cooler if necessary a plug or shut-down issues.

According to embodiments, there may be two operating modes of a cooling system. These are a normal production mode and a shutdown/restart mode. In the normal production mode, solids are allowed to crystalize/form. The solids that form on the pipe walls are then periodically melted off as solids, by the adhesive layer being melted and the deposits remaining in a solid state. After a shutdown of the cooling system, it is preferable to heat the system more by using the shutdown/restart mode to ensure that wax, hydrates and other deposits are in a transportable state and do not form plugs or slurry that can agglomerate or harden downstream. In the shutdown/restart mode, recycling the flow using the retour pump and conduit system is also preferable as the pump will help to mix the flow if it has separated or become lumpy.

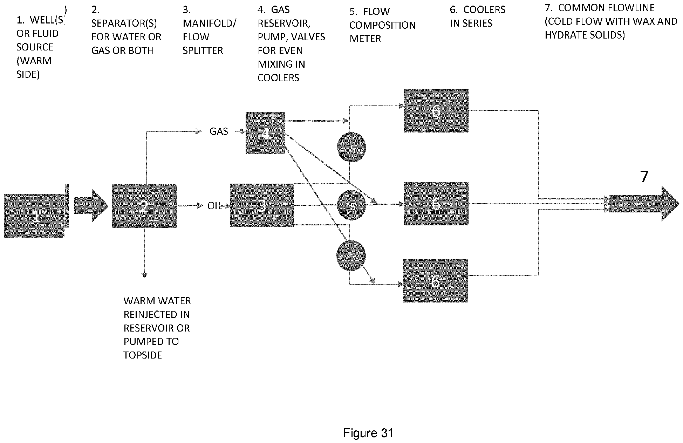

Embodiments also include the cooling systems being used in combination with subsea fluid separators as shown in Figure 31. In Figure 31, component 2 separates oil, water and gas from the fluid output from a wellhead. By removing the warm water some of the heat is advantageously removed. Separating the gas from the remaining liquid (which is mostly oil) is advantageous as it allows control of the fluid flowing into the cooling systems and the flow can be controlled to be homogeneous and similar in all of the cooling systems.

Successfully removing all, or most of, the water (or all the gas) from the flow, prior to splitting the flow and injecting it into several coolers, will substantially eliminate the risk of having both gas- and water constituents in the flow in some of the coolers after splitting. This may lead to hydrate formation when the flow from the different coolers are joined in a "common flowline" as shown in figure 31. Embodiments solve this problem by the operations shown in Figure 31. Following steps 1 to 7 in Figure 31, first (1) there is a mixed flow with all constituents (also water and gas) running from the fluid source. At (2) the flow in fed through a separator removing substantially all gas and water constituents prior to splitting the flow in (3). The separation at (2) may not be able to remove all of the gas and water from the flow but by substantially reducing the amount of gas and water in the flow improves the overall system performance and reduces the likelihood of downstream deposit formation occurring. To ensure a homogeneous flow composition gas is introduced to all coolers from a gas reservoir (4). The coolers in series (or parallel) will then all have the same flow composition and, importantly, they will have very little, or no, water constituents in the flow. Lastly the cold, stable state, fluid from all coolers are joined through a manifold to a common flow line If one of the cooler has water in them then a hydrate formation could potentially occur downstream in the common flow line (7). Separating the flow (as described above) substantially eliminates the risk of downstream hydrate formation.

Embodiments include applying the separation, splitting and joining techniques, as described above and shown in Figure 31, in other applications than subsea applications. Embodiments include all operations where the separation of flow constituents is required to avoid formation mechanisms downstream as these benefit from the techniques of embodiments. In particular, embodiments may be applied in surface applications such as top-side applications.

The cooling systems can be placed in series and/or parallel but preferably a plurality of relatively small cooling systems are used in parallel with each other. The mostly oil liquid is distributed to the cooling systems by the manifold and gas is then evenly pumped in to the cooling systems.

According to embodiments, the cooling systems do not substantially heat the fluid in a pipe but only heat the pipe wall for melting the adhesive layer of the wax (or meltable deposits). The deposits themselves are now in an inert and stabile state in the bulk flow as a solid that will not agglomerate or stick to the pipe walls again.

Preferably the cooling systems of embodiments use relatively narrow diameter pipes as these have more turbulent flow than larger pipes and this increase their efficiency. The pipe diameters are therefore less than or equal to 4 inches with a plurality of cooling systems being used in series or parallel.

The power used to heat the pipe walls is whatever power is required to heat the pipe walls to an appropriate temperature for achieving the required effect. The powers may be 10W/m, or less than 10W/m or greater than 10W/m.

The flowcharts and description thereof herein should not be understood to prescribe a fixed order of performing the method steps described therein. Rather the method steps may be performed in any order practicable. Although the present invention has been described in connection with specific exemplary embodiments, it should be understood that various changes, substitutions, and alterations apparent to those skilled in the art can be made to the disclosed embodiments without departing from the scope of the invention as set forth in the appended claims.

## Claims

1. A method of cooling an oil well product by a system in a subsea environment, the system comprising:
a pipe assembly that comprises:
a pipe (101) with an electrically conductive wall with a thermally conductive outer coating, wherein the coating is an electrical insulator;
a first electrical connector (106) that is arranged in electrical contact with the wall of the pipe (101); and
a second electrical connector (106) that is arranged in electrical contact with the wall of the pipe (101);
wherein the first and second electrical connectors (106) are arranged to support the flow of an electrical current through the wall of the pipe (101) to thereby heat the wall of the pipe (101); and
the thermally conductive outer coating of the wall of the pipe (101) is arranged to allow cooling of the outer surface of the wall of the pipe (101) by the surrounding environment of the pipe (101) when the outer surface of the wall of the pipe (101) is hotter than its surrounding environment, such that deposits are formed on the inner surface of the wall of the pipe;
wherein the system further comprises:
an electrical power supply (107) in electrical connection with the first and second connectors (106) of the pipe assembly;
wherein the electrical power supply (107) is arranged to cause electrical current to flow through the wall of the pipe (101) between the first and second electrical connectors (106) in dependence on an on/off supply of the electrical current, such that deposits formed on the inner surface of the wall of the pipe are released;
wherein the method comprises:
receiving, by the pipe (101), an oil well product, that is at a higher temperature than the ambient temperature of the system;
cooling, by seawater in the surrounding subsea environment of the pipe (101), the outer surface of the wall of the pipe (101) such that deposits are formed on the inner surface of the wall of the pipe;
heating the pipe (101) by an electrical current flowing through the wall of the pipe (101) between the first and second electrical connectors (106) in dependence on an on/off supply of the electrical current from the electrical power supply (107), such that deposits formed on the inner surface of the wall of the pipe are released; and
cooling, by seawater in the surrounding subsea environment of the pipe (101), the oil well product in the pipe (101) such that the oil well product output from the pipe (101) is below a deposit forming temperature of the oil well product, such that released deposits are carried in the output flow of the oil well product.

2. The method according to claim 1, wherein an outer surface of the coating is in direct contact with the surrounding environment of the pipe (101) and an inner surface of the coating is in direct contact with the wall of the pipe (101).

3. The method according to any preceding claim, wherein the coating is not designed to provide thermal insulation;
and, optionally, the coating is a ceramic;
and, optionally, the coating is one of boron nitride, aluminium nitride, aluminium oxide, chromium nitride, zirconium nitride, boron nitride, dichromium nitride, titanium aluminium nitride, chromium aluminium nitride, and titanium nitride, alkaline earth metal nitrides and alkali metal nitrides, and aluminium thermal spray; and
wherein, optionally, no thermal insulation is provided along the length of the pipe (101) between the first and second electrical connectors (106).

4. The method according to any preceding claim, further comprising an electrical cable (102) that is arranged in electrical contact with the second electrical connector (106) such that the cable (102) is in a series electrical connection with the pipe (101);
wherein, optionally, the cable (102) is arranged along the length of the pipe (101);
wherein, optionally, the cable (102) is arranged to substantially lie along the outer surface of the pipe (101); and
wherein, optionally, the longitudinal axes of the cable (102) and pipe (101) are substantially parallel with each other.

5. The method according to any preceding claim, wherein the pipe assembly further comprises one or more sacrificial anodes (103);
wherein, optionally, one or more sacrificial anodes (103) are arranged on the exterior surface of the pipe (101) and in direct electrical contact with the wall of the pipe (101);
wherein one or more sacrificial anodes (103) are arranged in an anode bank (302) and the anode bank (302) is electrically connected to the wall of the pipe (101) by a cable; and
wherein, optionally, at least one sacrificial anode (103) is provided in proximity to the first and/or second electrical connectors (106).

6. The method according to any preceding claim, wherein either the pipe (101) is linear or the pipe (101) comprises a plurality of bends and/or has a wavelike shape.

7. The method according to any preceding claim, further comprising a cooling element (1508) for cooling fluids flowing through the pipe (101), wherein at least part of the cooling element (1508) is located inside the pipe;
wherein, optionally:
a first end of the cooling element (1508) is located inside the pipe (101); and
a second end of the cooling element (1508) is located outside of the pipe (101);
wherein the cooling element (1508) is provided through a hole in the wall of the pipe (101); and
the second end of the cooling element (1508) is a heat sink; and
wherein the method comprises cooling fluids flowing through the pipe (101) by the cooling element (1508).

8. The method according to any preceding claim, wherein the electrical current flowing through the wall of the pipe (101) is a direct current.

9. The method according to any preceding claim, wherein the electrical current flowing through the wall of the pipe (101) is an alternating current.

10. The method according to any preceding claim, wherein the system comprises a plurality of pipe assemblies;
and, optionally, wherein the plurality of pipe assemblies are stacked together.

11. The method according to any preceding claim, wherein the system further comprises:
an input port for receiving an input fluid flow to the system; and
an output port for providing an output fluid flow of fluid that has flowed through one or more pipe assemblies comprised by the system;
wherein, optionally, the system further comprises:
a return pipe for providing a return flow path between the output port of the system and the input port of the system such that, in use, at least some of the fluid that has flowed through one or more pipe assemblies comprised by the system flows through the return pipe and through the one or more pipe assemblies again;
the system optionally further comprising one or more pumps and valves for providing a flow of fluid through the return pipe; and
wherein, optionally, the electrical power supply (107) is configured to heat the return pipe in dependence on an on/off supply of electrical current.

12. The method according to claim 10 or 11, wherein the system further comprises:
a splitting system arranged to split an input fluid flow into a plurality of fluid flows and supply each of the plurality of fluid flows to one of the pipe assemblies; and
a combining system arranged to combine each of the fluid flows output from the plurality of pipe assemblies.

13. The method according to any preceding claim, further comprising controlling, by a control system, the heating of the one or more pipe assemblies by the electrical power supply (107); and
periodically heating one or more pipe assemblies and/or sections of each of the one or more pipe assemblies.

14. The method according to any preceding claim, further comprising removing, by a water and/or gas separator, some of the water and/or gas of the oil well product prior to the oil well product being received by the pipe (101).

## Patentansprüche

1. Ein Verfahren zum Kühlen eines Ölbohrprodukts durch ein System in einer Unterwasserumgebung, wobei das System Folgendes umfasst:
eine Rohrbaugruppe, die Folgendes umfasst:
ein Rohr (101) mit einer elektrisch leitfähigen Wand mit einer wärmeleitenden Außenbeschichtung, wobei die Beschichtung ein elektrischer Isolator ist;
einen ersten elektrischen Verbinder (106), der in elektrischem Kontakt mit der Wand des Rohrs (101) angeordnet ist, und
einen zweiten elektrischen Verbinder (106), der in elektrischem Kontakt mit der Rohrwand (101) angeordnet ist;
wobei der erste und der zweite elektrische Anschluss (106) so angeordnet sind, dass sie den Fluss eines elektrischen Stroms durch die Rohrwand (101) unterstützen, wodurch die Rohrwand (101) erhitzt wird, und
die wärmeleitende Außenbeschichtung der Rohrwand (101) so angeordnet ist, dass sie eine Kühlung der äußeren Oberfläche der Rohrwand (101) durch die Rohrumgebung (101) ermöglicht, wenn die äußere Oberfläche der Rohrwand (101) heißer ist als ihre Umgebung,
so dass sich Ablagerungen auf der inneren Oberfläche der Rohrwand bilden;
wobei das System zudem Folgendes umfasst:
eine elektrische Stromversorgung (107) in elektrischer Verbindung mit dem ersten und dem zweiten Verbinder (106) der Rohrbaugruppe;
wobei die elektrische Stromversorgung (107) so angeordnet ist, dass sie in Abhängigkeit von einer Ein-/Aus-Zufuhr des elektrischen Stroms dazu führt, dass elektrischer Strom durch die Rohrwand (101) zwischen dem ersten und dem zweiten elektrischen Anschluss (106) fließt, so
dass Ablagerungen, die sich an der inneren Oberfläche der Rohrwand gebildet haben, freigesetzt werden;
wobei das Verfahren Folgendes umfasst:
Aufnahme eines Ölbohrprodukts, dessen Temperatur höher ist als die Umgebungstemperatur des Systems, durch das Rohr (101);
Kühlen
der äußeren Oberfläche der Rohrwand (101) durch Meerwasser in der Unterwasserumgebung des Rohrs (101), so dass sich Ablagerungen auf der inneren Oberfläche der Rohrwand bilden;
Erhitzen des Rohrs (101) durch einen elektrischen Strom, der durch die Rohrwand (101) zwischen dem ersten und dem zweiten elektrischen Anschluss (106) fließt, in
Abhängigkeit von einer Ein-/Aus-Zufuhr des elektrischen Stroms von der elektrischen Stromversorgung (107), so dass sich an der inneren Oberfläche der Rohrwand gebildete Ablagerungen lösen, und
Kühlen
des Ölbohrprodukts im Rohr (101) durch Meerwasser in der Unterwasserumgebung des Rohrs (101), so dass das aus dem Rohr (101) ausgegebene Ölbohrprodukt unter einer Ablagerungsbildungstemperatur des Ölbohrprodukts liegt, so dass freigesetzte Ablagerungen im Ausgangsstrom des Ölbohrprodukts mitgeführt werden.

2. Das Verfahren nach Anspruch 1, wobei eine äußere Oberfläche der Beschichtung in direktem Kontakt mit der Rohrumgebung (101) steht und eine innere Oberfläche der Beschichtung in direktem Kontakt mit der Rohrwand (101) steht.

3. Das Verfahren nach einem der vorhergehenden Ansprüche, wobei die Beschichtung nicht dazu bestimmt ist, eine Wärmeisolierung bereitzustellen;
und optional die Beschichtung eine Keramik ist
und optional die Beschichtung ein Element aus der folgenden Gruppe ist: Bornitrid, Aluminiumnitrid, Aluminiumoxid, Chromnitrid, Zirkoniumnitrid, Bornitrid, Dichromnitrid, Titanaluminiumnitrid, Chromaluminiumnitrid und Titannitrid, Erdalkalimetallnitride und Alkalimetallnitride und Thermospritzaluminium; und
wobei optional entlang der Länge des Rohrs (101) zwischen dem ersten und dem zweiten elektrischen Anschluss (106) keine Wärmeisolierung bereitgestellt ist.

4. Das Verfahren nach einem der vorhergehenden Ansprüche, das zudem ein elektrisches Kabel (102) umfasst, das in elektrischem Kontakt mit dem zweiten elektrischen Verbinder (106) angeordnet ist, so dass das Kabel (102) in einer elektrischen Reihenverbindung mit dem Rohr (101) steht;
wobei optional das Kabel (102) entlang der Länge des Rohrs (101) angeordnet ist;
wobei optional das Kabel (102) so angeordnet ist, dass es im Wesentlichen entlang der äußeren Oberfläche des Rohrs (101) liegt, und
wobei optional die Längsachsen des Kabels (102) und des Rohrs (101) im Wesentlichen parallel zueinander sind.

5. Das Verfahren nach einem der vorhergehenden Ansprüche, wobei die Rohrbaugruppe zudem eine oder mehrere Opferanoden (103) umfasst;
wobei optional eine oder mehrere Opferanoden (103) auf der äußeren Oberfläche des Rohrs (101) und in direktem elektrischem Kontakt mit der Rohrwand (101) angeordnet sind;
wobei eine oder mehrere Opferanoden (103) in einer Anodenbank (302) angeordnet sind und die Anodenbank (302) über ein Kabel elektrisch mit der Rohrwand (101) verbunden ist und
wobei optional mindestens eine Opferanode (103) in der Nähe des ersten und/oder zweiten elektrischen Anschlusses (106) bereitgestellt ist.

6. Das Verfahren nach einem der vorhergehenden Ansprüche, wobei entweder das Rohr (101) linear ist oder das Rohr (101) mehrere Biegungen und/oder eine wellenförmige Form aufweist.

7. Das Verfahren nach einem der vorhergehenden Ansprüche, das zudem ein Kühlelement (1508) zum Kühlen von durch das Rohr (101) strömenden Fluiden umfasst,
wobei sich mindestens ein Teil des Kühlelements (1508) innerhalb des Rohrs befindet;
wobei optional Folgendes der Fall ist:
ein erstes Ende des Kühlelements (1508) befindet sich innerhalb des Rohrs (101) und
ein zweites Ende des Kühlelements (1508) befindet sich außerhalb des Rohrs (101);
wobei das Kühlelement (1508) durch ein Loch in der Rohrwand (101) bereitgestellt wird und
das zweite Ende des Kühlelements (1508) ein Kühlkörper ist und
wobei das Verfahren das Kühlen von Fluiden umfasst, die durch das Kühlelement (1508) durch das Rohr (101) strömen.

8. Das Verfahren nach einem der vorhergehenden Ansprüche, wobei der durch die Rohrwand (101) fließende elektrische Strom ein Gleichstrom ist.

9. Das Verfahren nach einem der vorhergehenden Ansprüche, wobei der durch die Rohrwand (101) fließende elektrische Strom ein Wechselstrom ist.

10. Das Verfahren nach einem der vorhergehenden Ansprüche, wobei das System mehrere Rohrbaugruppen umfasst
und wobei optional die mehreren Rohrbaugruppen zusammen gestapelt sind.

11. Das Verfahren nach einem der vorhergehenden Ansprüche, wobei das System zudem Folgendes umfasst:
einen Eingangsanschluss zur Aufnahme eines Eingangsfluidstroms ins System und
einen Ausgangsanschluss zum Bereitstellen eines Ausgangsfluidstroms von Fluid, das durch eine oder mehrere im System enthaltene Rohrbaugruppen geflossen ist;
wobei das System optional zudem Folgendes umfasst:
ein Rücklaufrohr zur Bereitstellung eines Rückflusswegs zwischen dem Ausgangsanschluss des Systems und dem Eingangsanschluss des Systems, so dass im Betrieb mindestens ein Teil des Fluids, das durch eine oder mehrere im System enthaltene Rohrbaugruppen geflossen ist, durch das Rücklaufrohr und wieder durch die eine oder die mehreren Rohrbaugruppen fließt;
wobei das System optional zudem eine oder mehrere Pumpen und Ventile umfasst, um einen Fluidstrom durch das Rücklaufrohr bereitzustellen, und
wobei optional die elektrische Stromversorgung (107) so konfiguriert ist, dass sie das Rücklaufrohr in Abhängigkeit von einer Ein-/Aus-Zufuhr von elektrischem Strom erhitzt.

12. Das Verfahren nach Anspruch 10 oder 11, wobei das System zudem Folgendes umfasst:
ein Aufteilungssystem, das so angeordnet ist, dass es einen zugeführten Fluidstrom in mehrere Fluidströme aufteilt und jeden der mehreren Fluidströme einer der Rohrbaugruppen zuführt, und
ein Kombinationssystem, das so angeordnet ist, dass es alle der von den mehreren Rohranordnungen ausgegebenen Fluidströme kombiniert.

13. Das Verfahren nach einem der vorhergehenden Ansprüche, das zudem das Steuern der Erhitzung der einen oder mehreren Rohrbaugruppen durch die elektrische Stromversorgung (107) durch ein Steuersystem umfasst, und
periodisches Erhitzen einer oder mehrerer Rohrbaugruppen und/oder
Abschnitte jeder der einen oder mehreren Rohrbaugruppen.

14. Das Verfahren nach einem der vorhergehenden Ansprüche, das außerdem das Entfernen eines Teils des Wassers und/oder Gases des Ölbohrprodukts durch einen Wasser- und/oder Gasabscheider umfasst, bevor das Ölbohrprodukt vom Rohr (101) aufgenommen wird.

## Revendications

1. Le procédé de refroidissement de produits en provenance d'un puits de pétrole par le biais d'un système situé dans un environnement sous-marin, le système comprenant :
un ensemble de tuyaux comprenant :
un tuyau (101) présentant une paroi électro-conductrice et un revêtement extérieur thermo-conducteur, dans lequel le revêtement est un isolant électrique ;
un premier connecteur électrique (106) disposé en contact électrique avec la paroi du tuyau (101) ; et
un deuxième connecteur électrique (106) disposé en contact électrique avec la paroi du tuyau (101) ;
dans lequel le premier et le deuxième connecteurs électriques (106) sont conçus pour supporter le courant électrique circulant à travers la paroi du tuyau (101) afin de réchauffer la paroi du tuyau (101) ; et
le revêtement extérieur thermo-conducteur de la paroi du tuyau (101) est conçu pour assurer le refroidissement de la surface extérieure de la paroi du tuyau (101) via l'environnement du tuyau (101) lorsque la surface extérieure de la paroi du tuyau (101) est plus chaude que l'environnement,
de sorte que des dépôts se forment sur la surface intérieure de la paroi du tuyau ;
dans lequel le système comprend en outre :
une alimentation électrique (107) en connexion électrique avec le premier et le deuxième connecteurs (106) de l'ensemble de tuyaux ;
dans lequel l'alimentation électrique (107) est conçue pour faire circuler le courant électrique à travers la paroi du tuyau (101), entre le premier et le deuxième connecteurs électriques (106), en fonction de la fourniture ou
de la non-fourniture de courant électrique, de sorte que les dépôts formés sur la surface intérieure de la paroi du tuyau soient libérés ;
dans lequel le procédé consiste à :
faire pénétrer dans le système, par le biais du tuyau (101), des produits en provenance d'un puits de pétrole dont la température est supérieure à la température ambiante du système ;
refroidir, par le biais de l'eau de mer présente dans l'environnement sous-marin du tuyau (101), la surface extérieure de la paroi du tuyau (101) de sorte que des dépôts se forment sur la surface intérieure de la paroi du tuyau ;
réchauffer le tuyau (101) par le biais d'un courant électrique circulant à travers la paroi du tuyau (101), entre le premier et le deuxième connecteurs électriques (106), en
fonction de la fourniture ou de la non-fourniture de courant électrique provenant de l'alimentation électrique (107), de sorte que les dépôts formés sur la surface intérieure de la paroi du tuyau soient libérés ; et à
refroidir, par le biais de l'eau de mer présente dans l'environnement sous-marin du tuyau (101), les produits en provenance d'un puits de pétrole présents dans le tuyau (101) de sorte que les produits en provenance d'un puits de pétrole sortant du tuyau (101) présentent une température inférieure à la température de formation de dépôts desdits produits, de sorte que les dépôts libérés soient entraînés dans le flux de sortie des produits en provenance d'un puits de pétrole.

2. Le procédé de la revendication 1, dans lequel la surface extérieure du revêtement est en contact direct avec l'environnement du tuyau (101) et la surface intérieure du revêtement est en contact direct avec la paroi du tuyau (101).

3. Le procédé de l'une des revendications précédentes, dans lequel le revêtement n'est pas conçu pour fournir une isolation thermique ;
et, éventuellement, le revêtement est fabriqué à partir d'une céramique ;
et, éventuellement, le revêtement est fabriqué à partir de l'un des composés suivants : nitrure de bore, nitrure d'aluminium, oxyde d'aluminium, nitrure de chrome, nitrure de zirconium, nitrure de bore, nitrure de dichrome, nitrure d'aluminium de titane, nitrure d'aluminium de chrome et nitrure de titane, nitrures de métaux alcalino-terreux et nitrures de métaux alcalins, et pulvérisation thermique d'aluminium ; et
dans lequel, éventuellement, aucune isolation thermique n'est fournie sur la longueur du tuyau (101) entre le premier et le deuxième connecteurs électriques (106).

4. Le procédé de l'une des revendications précédentes, comprenant en outre un câble électrique (102) disposé en contact électrique avec le deuxième connecteur électrique (106) de sorte que le câble (102) soit en connexion électrique en série avec le tuyau (101) ;
dans lequel, éventuellement, le câble (102) est disposé sur la longueur du tuyau (101) ;
dans lequel, éventuellement, le câble (102) est disposé de manière à pratiquement s'étendre le long de la surface extérieure du tuyau (101) ; et
dans lequel, éventuellement, les axes longitudinaux du câble (102) et du tuyau (101) sont pratiquement parallèles l'un à l'autre.

5. Le procédé de l'une des revendications précédentes, dans lequel l'ensemble de tuyaux comprend en outre une ou plusieurs anodes sacrificielles (103) ;
dans lequel, éventuellement, une ou plusieurs anodes sacrificielles (103) sont disposées sur la surface extérieure du tuyau (101) et en contact électrique direct avec la paroi du tuyau (101) ;
dans lequel une ou plusieurs anodes sacrificielles (103) sont disposées dans un banc d'anodes (302) et dans lequel le banc d'anodes (302) est connecté électriquement à la paroi du tuyau (101) par un câble ; et
dans lequel, éventuellement, au moins une anode sacrificielle (103) est prévue à proximité du premier et/ou du deuxième connecteurs électriques (106).

6. Le procédé de l'une des revendications précédentes, dans lequel le tuyau (101) est rectiligne ou dans lequel le tuyau (101) comprend plusieurs coudes et/ou présente une forme ondulée.

7. Le procédé de l'une des revendications précédentes, comprenant en outre un élément de refroidissement (1508) permettant de refroidir les fluides circulant à travers le tuyau (101),
dans lequel l'élément de refroidissement (1508) se trouve au moins partiellement à l'intérieur du tuyau ;
dans lequel, éventuellement :
la première extrémité de l'élément de refroidissement (1508) se trouve à l'intérieur du tuyau (101) ; et
la deuxième extrémité de l'élément de refroidissement (1508) se trouve à l'extérieur du tuyau (101) ;
dans lequel l'élément de refroidissement (1508) est disposé à travers un trou dans la paroi du tuyau (101) ; et
la deuxième extrémité de l'élément de refroidissement (1508) est un dissipateur de chaleur ; et
dans lequel le procédé consiste à refroidir les fluides circulant à travers le tuyau (101) par le biais de l'élément de refroidissement (1508).

8. Le procédé de l'une des revendications précédentes, dans lequel le courant électrique circulant à travers la paroi du tuyau (101) est un courant continu.

9. Le procédé de l'une des revendications précédentes, dans lequel le courant électrique circulant à travers la paroi du tuyau (101) est un courant alternatif.

10. Le procédé de l'une des revendications précédentes, dans lequel le système comprend plusieurs ensembles de tuyaux ;
et, éventuellement, dans lequel les différents ensembles de tuyaux sont empilés les uns sur les autres.

11. Le procédé de l'une des revendications précédentes, dans lequel le système comprend en outre :
un orifice d'entrée permettant de faire pénétrer un flux de fluide entrant dans le système ; et
un orifice de sortie permettant de faire sortir un flux de fluide sortant qui a circulé à travers un ou plusieurs des ensembles de tuyaux du système ;
dans lequel, éventuellement, le système comprend en outre :
un tuyau de retour constituant un circuit de retour entre l'orifice de sortie du système et l'orifice d'entrée du système de sorte que, pendant l'utilisation, au moins une partie du fluide qui a circulé à travers un ou plusieurs des ensembles de tuyaux du système circule à travers le tuyau de retour puis à nouveau à travers le ou les ensembles de tuyaux ;
le système comprenant en outre, éventuellement, une ou plusieurs pompes et soupapes permettant de fournir un flux de fluide à travers le tuyau de retour ; et
dans lequel, éventuellement, l'alimentation électrique (107) est configurée pour réchauffer le tuyau de retour en fonction de la fourniture ou de la non-fourniture de courant électrique.

12. Le procédé de la revendication 10 ou 11, dans lequel le système comprend en outre :
un système de division conçu pour diviser un flux de fluide entrant en plusieurs flux de fluide et pour fournir chacun des flux de fluide à l'un des ensembles de tuyaux ; et
un système de combinaison conçu pour combiner chacun des flux de fluide sortant des différents ensembles de tuyaux.

13. Le procédé de l'une des revendications précédentes, consistant en outre à commander, au moyen d'un système de commande, le réchauffage d'un ou de plusieurs ensembles de tuyaux par le biais de l'alimentation électrique (107) ; et à
réchauffer régulièrement un ou plusieurs ensembles de tuyaux et/ou certaines sections du ou des ensembles de tuyaux.

14. Le procédé de l'une des revendications précédentes, consistant en outre à éliminer, par le biais d'un séparateur d'eau et/ou de gaz, une partie de l'eau et/ou du gaz des produits en provenance d'un puits de pétrole avant que ceux-ci ne pénètrent dans le tuyau (101).
